(19)

Europäisches
Patentamt

European
Patent Office

Office européen
des brevets

(11) **EP 3 683 741 A1**

(12) **EUROPEAN PATENT APPLICATION**

(43) Date of publication:
**22.07.2020 Bulletin 2020/30**

(51) Int Cl.:
**G06Q 10/04** (2012.01)    **G05D 23/19** (2006.01)
**G06Q 50/06** (2012.01)

(21) Application number: **19152612.8**

(22) Date of filing: **18.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ecole Polytechnique Federale De Lausanne**
**(EPFL) EPFL-TTO**
**1015 Lausanne (CH)**

(72) Inventor: **Malamud, Semyon**
**1012 LAUSANNE (CH)**

(74) Representative: **Bittner, Peter et al**
**Peter Bittner und Partner**
**Herrenwiesenweg 2**
**69207 Sandhausen (DE)**

(54) **SYSTEM AND METHOD FOR USER DATA INPUT TO MODIFY CONFIGURATIONS**

(57)    A computer-implemented method, computer program product and computer system (100) for editing a configuration of a real-world object to optimize a future state of the real-world object. The configuration includes a plurality of potential states for the real-world object. Via a graphical user interface device (200), an initial visual representation of a default configuration is presented to a user. The potential states are represented by interactive graphical user interface objects (PS1 to PS4). Further, a graphical result object (RO1) represents to a user the outcome of an optimization over a set of possible combinations of optimization inputs that are consistent with the default configuration. The user modifies the default configuration via a drag action (DA1) applied to at least one of the interactive graphical user interface objects. The system re-applies the optimization to the modified configuration further optimizing the combination of inputs consistent with modified configuration and provides at least one modified graphical result object (RO2) to the user (10). The modified graphical result object represents at least one result value characterizing the outcome of the optimization over a set of combinations of inputs that are consistent with the modified configuration.

FIG. 1

**Description**

**Technical Field**

The present invention generally relates to electronic data processing, and more particularly, relates to methods, computer program products and systems for improving data input by a user to modify configuration settings for real-world objects.

**Background**

In many real-world situations, human users are confronted with the technical task to select configurations of real-world objects so that the real-world object can be transformed into an optimal state. Typically, a configurable real-world object is in an initial (or default) state but can transition into other states in accordance with respective configurations. However, for a human user it is difficult to select an optimized configuration under certain constraints unless the user exactly understands the behavior of the real-world object.

An example of a real-world object is an electrical device (e.g., a robot or machine) which uses energy with a constraint that the use of a particular energy type is to be minimized. Another example of a real-world device is a vehicle (e.g., car or aircraft) powered by a fuel driven engine with a constraint that fuel consumption is to be optimized. Another example of a real-world object is a heating system of a (smart) building with a constraint to keep the room temperature within a narrow range of a target temperature value. Further examples are given in the description below.

**Summary**

There is a need to provide systems and methods enabling a robust user interaction with a data input device supporting the user to select an optimized configuration for the real-world object under given constraints. Robust user interaction, as used herein, refers to a user interaction with the computer system which reduces the likelihood for user inputs which lead to a poor or sub-optimal configuration of the real-world object.

This problem is solved by the features of the independent claims. In one embodiment, a computer-implemented method is provided for editing a configuration of a real-world object to optimize a future state of the real-world object. Examples of real-world objects include but are not limited to electrical devices, heater devices, vehicles, data storage devices for storing data records in data structures, etc.. In some applications, even a human body may be considered as a real-world object where the potential future states relate to the health condition of the human. Various examples of scenarios related to different real-world objects are discussed in the detailed description.

The configuration includes a plurality of potential future states for the real-world object. Such potential future states, referred to as "potential states" herein, are described as discrete values of a function of a base parameter on which the potential states depend. It is to be noted that each state is defined by a discrete value pair with a state value and a base parameter value. In other words, the configuration describes a discrete number of different states of the real-world object which can prevail at a pre-specified future time point or at different future time points. The user is now confronted with the task to modify the configuration in such a way that the future state of the real-world object gets optimized under a particular constraint. Typically, such constraints are user-defined or pre-defined.

Initially, the user selects the base parameter and the type of potential states for which an optimized configuration is to be determined. The selection of the user is received by the system via appropriate input means of the user interface (e.g., mouse, touchscreen, audio, etc.). For example, the user interface may propose a list of potential value pairs with each pair including a particular base parameter with a respective state type for which configuration optimizations are supported by an optimizer component of a computer system which is communicatively coupled with the graphical user interface component used by the user. Alternatively, the graphical user interface may provide the user with a questionnaire where the answers of the user finally identify the optimization objective of the user, thus leading implicitly to the selection of base parameter and state type for the further user input process.

Once the optimization objective of the user is received in the form of the base parameter and the state type, the graphical user interface provides an initial visual representation of a default configuration. The default configuration includes a predefined list of configuration value pairs, each configuration value pair with a base parameter value and a corresponding potential state value. Such value pairs may be stored in a data structure or they may be entered by the user. That is, a configuration value pair unambiguously defines a potential state of the real-world object.

In the following sections the example of an electrical device (e.g., a heating control device) as a real-world object is used. However, this example is used for explanatory purposes only with no intention to limit the scope of the claims. A person skilled in the art is able to transfer the teachings to any other appropriate real-world objects with respective base parameter and state type. In the example, the expected consumption of non-renewable energy consumption by an electrical device as a function of expected solar light intensity for multiple future solar light intensity values may define a default configuration for the electrical device. Thereby, the renewable energy may be generated by photovoltaic cells. The user intends to optimize this configuration under one or more predefined constraints. The constraints may be defined by the user or may be predefined for the optimizer component. In the electrical device example the constraint may be that the operational output of the electrical device should be optimized by taking into account all possible future values of the base parameter, but at the same time, the use of non-renewable energy by the device should be minimized. Thereby, all possible future values of the base parameter correspond to the base parameter values associated with all the potential states of the respective configuration.

The plurality of the potential states of the real-world object are represented by interactive graphical user interface objects which correspond to default function values at respective base parameter values (i.e., potential future base parameter values). In other words, each configuration value pair is represented by a respective interactive graphical user interface object in a visual representation of the configuration on the graphical user interface. An interactive user interface object, as used herein, is an object which is responsive to a user interaction. For example, the object may be represented as an icon which can be moved by the user by a drag action. Such drag action may be performed via a respective gesture applied to the icon on a touch screen, or it may be performed by selecting the icon (e.g., with a mouse click) and using user interaction means (e.g., a slider) to move the icon. For example, the visual representation of the default configuration may be in the form of a graphical chart showing the potential state values as a function of the base parameter. Thereby, predefined configuration value pairs may also be connected by a curve which is fit into the configuration value pairs. An interactive user interface object representing a potential configuration value pair allows the user to modify the values of this value pair by applying the drag action. By moving the object to another position, both values of the value pair, the base parameter value (e.g., horizontal position) and/or the state value (e.g., vertical position), can be modified by the user, thus resulting in a modified configuration. It is to be noted that the user can also provide input by modifying multiple values of multiple configuration value pairs (e.g., by performing a respective sequence of drag actions).

The default configuration is provided as an input to the optimizer component. The optimizer component includes at least one optimization algorithm for the selected base parameter/state type under the given constraint. As different base parameter/state type pairs can be supported the optimizer component may include a plurality of optimization algorithms dedicated to various combinations of base parameters/state types. In some cases, a particular configuration (i.e., a particular plurality of configuration value pairs) can be achieved with multiple (different) combinations of real world inputs. Such input combinations are referred to as input combinations "consistent with a given configuration". For a given a configuration, the optimizer component is optimizing an objective across all possible input combinations that are consistent with the given configuration. The objective depends on the exact properties of the real-world object in question. For example, the objective could be to minimize non-renewable energy consumption. Even for the same base parameter/state type combination different optimization algorithms may be available to address different optimization constraints. The optimizer component now applies the respective optimization algorithm (i.e. the optimization algorithm adapted to optimize the default configuration under a predefined constraint) to the default configuration and provides at least one graphical result object to the user. The graphical result object represents at least one corresponding result value characterizing the outcome of the objective optimization (i.e., the optimization of the objective) for the default configuration. In the example of the graphical representation of the potential states as a function of the base parameter the single value may be represented as a horizontal line reflecting the value as a constant in the graph or as any other representation suitable to represent a numeric value. Typically, the result value is a single value. However, in some situations multiple result values may be computed by the optimization algorithm. For example, when consumption of two different types non-renewable energy (e.g., oil and wood) are to be minimized, the graph may show the consumption of both energy types.

Again, without any intention to limit the scope of the claims, the electrical device example is used for explanation. The electrical device consumes renewable energy when available, and non-renewable energy otherwise. Thus, the optimization problem faces a tradeoff between the use of renewable (e.g., solar) energy for operation or storing this energy in a battery for future needs (e.g., for situations in which the lighting conditions (with daylight) get really bad). This is a non-trivial optimization problem. The problem becomes even more complicated when, in addition, wind energy is taken into account.

For the predefined configuration, the optimizer component solves the optimization problem above with a respective optimization algorithm across all possible inputs that are consistent with the predefined configuration and visually represents the expected attained objective as a single value. That is, the user can immediately see how the current configuration affects the future state of the real-world object. In other words, the graphical result object reflecting the result value provided by the optimizer presents to the user a characteristic value that provides aggregated information about all potential future states of the real-world object. For example, if the objective is to minimize non-renewable energy consumption, averaged across all possible future states of the scenario, the graphical result object precisely reports this average value, thus summarizing numerous characteristics of the configuration into one number. In an optional embodiment, the graphical user interface may provide a drill-down function which allows the user to select the graphical result object to retrieve further information about the optimization. For example, such further information may include the optimization inputs which were used to achieve the current (or default) configuration. Such optimization inputs are otherwise hidden from the user. For example, an optimization input parameter may be the energy consumption of a device. Further examples are illustrated in the detailed description. The optimizer component receives such inputs either as additional optimization inputs from a user or the inputs may be predefined in an appropriate data structure from where they can be retrieved automatically. Examples of such additional inputs can be: The smart house is powered by solar energy, wind energy and fossil energy sources (e.g., oil or gas). A doctor may provide inputs that for the treatment of a particular patient only acetaminophen (aspirin) and ibuprophen are used where the maximum ibuprophen dose per day is 400 mg.

The user pursues the technical task to define a configuration for the real-world object which results in a further optimized configuration of states across future values of the base parameter when compared to the current (or default) configuration. To achieve this goal the user interacts with the graphical user interface to modify the current configuration by applying a drag action for at least one of the interactive graphical user interface objects. Such a drag action is sensed by the user interface device and changes the potential state associated with the respective interactive user interface object (e.g., changes the state value of the respective interactive user interface object for one or multiple potential future values of the base parameter). For example, the state value may be moved to a higher or to a lower value by touching on the interactive object and dragging it upwards or downwards on the screen. In another implementation, a slider may be used to apply the movement to the interactive object once the object is selected (e.g., by a mouse click or the like). Further, the corresponding base parameter value may be moved to a higher or to a lower value by selecting the interactive object and dragging it left or right on the screen. Of course, both values of the configuration value pair can be changed simultaneously when dragging the interactive user interface object in a diagonal direction or any direction which deviates from a mere horizontal or vertical direction. When the user drags the interactive object, the modified state/base parameter value which corresponds to the new position of the interactive object is determined by the graphical user interface via the respective display coordinates. In other words, by executing the drag action the user provides a user defined input to modify the associated at least one default configuration value pair into a user defined modified configuration value pair. This user action results in at least one modified potential state of a user defined configuration.

The modified configuration value pair(s) is/are received by the optimizer component and the optimization algorithm is re-applied to the modified configuration to optimize the combination of inputs consistent with the modified configuration under the optimization constraint. Again, the optimization algorithm determines at least one result value characterizing the outcome of the optimization for the user defined modified configuration. At least one corresponding modified graphical result object (representing this result value) is then presented to the user. By comparing the value corresponding to the initial graphical result object with the value corresponding to the modified result object the user can immediately recognize whether the modified configuration leads to an improved configuration of a future state of the real-world object across a set of possible future values of the base parameter (i.e., across the base parameter values of all potential states or a subset of those) compared to the previous configuration.

The modification of the configuration can be repeated multiple times until the user is satisfied with the degree of optimization achieved by a particular modified configuration. The user finally selects the particular modified configuration (or the initial default configuration) to operate the real-world object in accordance with the selected configuration. The optimizer then selects the optimal combination of inputs among all possible input combinations consistent with the selected configuration. This combination of inputs is then implemented for the real-world object.

Referring again to the electrical device example, the user defined modified configurations with adjusted potential state values may take into account the user's beliefs about future weather conditions (light intensity) and the importance of renewable energy for the user. The importance of the renewable energy is reflected in the user defined optimization constraint and becomes part of the objective function for the optimization algorithm.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

**Brief Description of the Drawings**

FIG. 1 includes a simplified block diagram of a computer system for editing a configuration of a real-world object according to an embodiment;
FIG. 2 is a simplified flow chart illustrating a computer-implemented method editing a configuration of a real-world object to optimize a future state of the real-world object according to an embodiment;
FIGs. 3 to 5 show simplified views of graphical user interfaces according to various embodiments;
FIG. 6 shows a further simplified view of a graphical user interface according to an embodiment; and

FIG. 7 is a diagram that shows an example of a generic computer device and a generic mobile computer device, which may be used with the techniques described herein.

**Detailed Description**

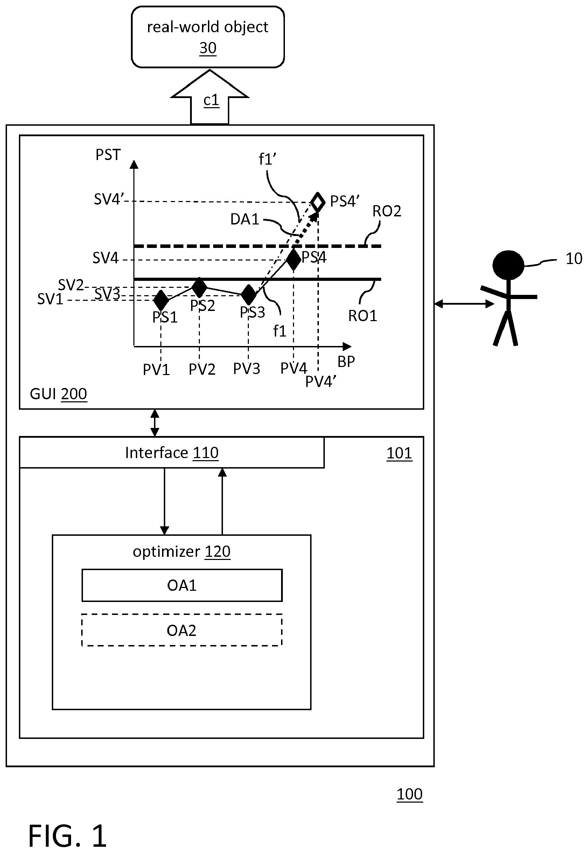

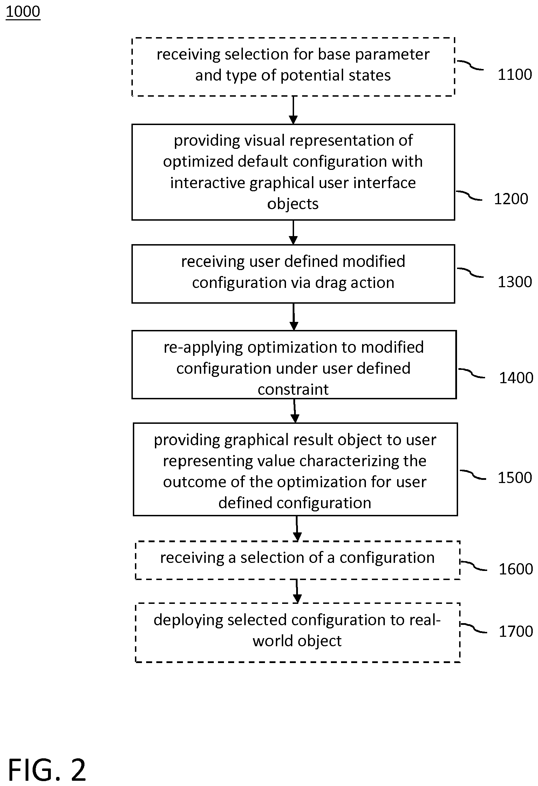

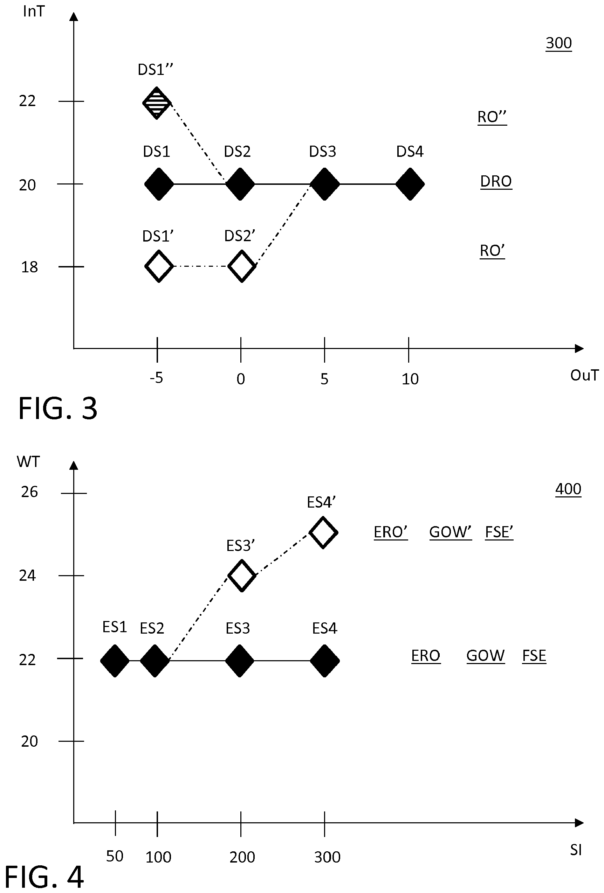

FIG. 1 includes a simplified block diagram of a computer system 100 with a graphical user interface GUI 200 for editing a configuration of a real-world object 30 according to an embodiment. FIG. 1 will be described in the context of the flow chart of FIG. 2 illustrating a respective computer method 1000 for editing the configuration according to an embodiment. For this reason, the following description includes reference numbers for both figures. The following description is explaining the embodiments of the invention by way of example. The chosen example of a building temperature regulation as illustrated in FIG. 3 is not intended to limit the scope of the claims to real-world objects which are buildings (e.g., smart houses). Rather, additional examples will show that the inventive concept is applicable to any real-world object operable according to a configuration describing its potential future states.

The computer system 100 for editing a configuration of the real-world object 30 supports the user 10 to optimize a future state of the real-world object 30. The configuration includes (or corresponds to) a plurality of potential states for the real-world object 30. Each potential state corresponds to a configuration value pair which includes a particular value of a base parameter and a particular value of an associated state value. In other words, the state values SV1 to SV4 of the four potential states in the example of FIG. 1 depend on the respective base parameter values PV1 to PV4 and the state values can be described as a function f1 of a base parameter BP.

The computer system 100 has a graphical user interface component GUI 200. GUI 200 provides standard input/output functions (e.g., to support interaction via touch screen, mouse, keyboard or the like) to the user to let the user interact with the computer system. In an optional initialization step the GUI 200 receives a selection for the base parameter BP and the type PST of the potential states from the user 10. With this selection, the user can set the context for the computer system. Alternatively, the system may be pre-configured with a particular configuration scenario where the base parameter BP and state type PST is already known by the system (e.g., predefined BP and PST).

GUI 200 provides to the user 10 an initial visual representation of a default configuration which corresponds to a plurality of configuration value pairs for the potential states forming part of the default configuration. Each of the potential states is represented by a corresponding interactive graphical user interface object PS1 to PS4 which represents the respective default function value of the potential state at the associated base parameter value.

Turning now briefly to FIG. 3 to illustrate a graphical user interface 300 used for temperature regulation in a smart house. The real-world object in this example can be considered to be the heating of the smart house. In the example, the interactive user interface objects are represented by diamond icons. In general, an interactive user interface object may have any appropriate shape (e.g., square, rectangle, circle, etc.) which allows the user to distinguish the interactive object form other graphical user interface objects. The interactive objects may also be distinguished from other objects by other display properties, such as for example, the color, background pattern or even the display mode (e.g., highlighting by blinking, etc.) The black diamonds DS1 to DS4 in the example belong to the default configuration. In this scenario, the base parameter BP is the outside temperature OuT expected during the winter months. The type PST of the state values is selected as the temperature InT inside the smart house. In the example, possible values of the base parameter (outside temperature, OuT) are OuT = -5, 0, 5, 10 degrees Celsius. Of course, in a real application many more temperature values might be considered to have higher granularity for the temperature scale (e.g., a base parameter value for a potential state may be defined at every half degree) and to have a temperature range with lower min and higher max temperatures.

The configuration describes the average internal (room) temperature as a function of the temperature outside. The default configuration suggests a constant inside temperature InT of 20 degrees Celsius for all potential states. In other words, the heating of the smart house would be controlled by the default configuration to keep the room temperature at 20 degrees independent of the outside temperature.

Turning back to FIG. 1, the optimizer 120 receives the default configuration (e.g., via the interface 110 and performs an optimization over all or at least a subset of possible combinations of optimization inputs that are consistent with the default configuration. Thereby, the optimizer can take into account one or more optimization constraints on the set of admissible inputs (i.e., the set of input combinations). An optimization constraint is an additional input to the optimization algorithm. The optimization constraint may be modifiable (e.g., a user can set an upper bound on the admissible energy consumption). The default configuration may be initially set by the user or it may be a preconfigured set of potential future states (e.g., stored in a data structure used for operating the real-world object).

In the smart house heating scenario of FIG. 3, examples for constraints are: the house can be heated and cooled using water (which in turn is heated using gas, oil, or wood, referred to as GOW), or by electric air conditioning powered by regular electricity referred to as RE. The term regular electricity as used herein relates to electricity which is generated from any arbitrary mix of energy sources including nuclear energy, or energy produced by coal or gas driven power plants. The objective of the optimization is to reduce the consumption of non-renewable energy used for the heating of the smart house to reduce damage to the environment. The damage to the environment is considered to increase with the total use of energy by the smart house heating. In other words, in the example, energy is differentiated into renewable and non-renewable energy and the optimization goal is to prefer to use of renewable over non-renewable energy.

Suppose that InT = G1(OuT, GOW, RE) for a function G1. That is, the interior temperature InT depends on the outside temperature OuT as well as on the energy consumption GOW, RE. Then, given a state configuration CONF = ((InT1, OuT1), (InT2, OuT2), (InT3, OuT3), (InT4, OuT4)) (e.g., represented by the curve in GUI 300 with the interactive objects DS1 to DS4), an input combination INPUT_COMBIN = ((GOW1, RE1), (GOW2, RE2), (GOW3, RE3), (GOW4, RE4)) is consistent with CONF if - and only if the following consistency conditions are fulfilled:

InTI = G1(OuT1, GOW1, RE1), ..., InT4 = G1(OuT4, GOW4, RE4) (consistency conditions)

Suppose also that the damage to the environment associated with INPUT_COMBIN is given by a function F1: F1(INPUT_COMBIN) = F1((GOW1, RE1), (GOW2, RE2), (GOW3, RE3), (GOW4, RE4)).

The nature of this function can be complex because moving the heating system from, for example, energy profile (GOW1, RE1) to, for example, (GOW2, RE2) is associated with additional energy losses.

The objective can thus be:

Objective = minimize F1(INPUT_COMBIN) over all INPUT_COMBIN satisfying the consistency conditions.

The optimization algorithm OA1 (cf. FIG. 1) solves this minimization problem. The graphical result object DRO can represent the result of this minimization. For example, DRO may include a numerical value illustrating the energy consumption associated with the default configuration. For example, the graphical result object DRO may represent the average energy consumption AEC = (1/4) (RE1 + GOW1 + ... + RE4 + GOW4) for the energy profile that solves the minimization problem of the "Objective" function.

In the example, the eight numbers ((20, -5), (20, 0), (20, 5), (20, 10)) in the input combination profile INPUT_COMBIN of the default configuration serve as the inputs to the optimization algorithm which are typically not shown to the user via GUI 200. Given the default configuration of (InT, OuT), the user wants to see a graphical result object representing the result of the "Objective" optimization. It is to be noted, that in this example the outcome of the optimization also includes eight numbers as result values which is to seen as the optimization of the default configuration. Such values are then aggregated into one or more summarizing result values. For example, the outcome of the optimization can be represented by a sum or average values over all individual optimization result values, or, more generally, by an arbitrary (linear or non-linear) function of the optimization result values.

Persons skilled in the art of optimization are able to select an appropriate optimization algorithm (e.g., standard gradient descent methods or combinatorial optimization methods) for solving the optimization problem associated with the respective example scenario.

In general, a result value is determined by the optimization algorithm OA1 which is the outcome of solving the "Objective" minimization problem over all possible inputs (INPUT_COMBIN) satisfying the necessary constraints. The GUI 200 provides 1200 to the user 10 a graphical result object RO1 representing this result value. In the example of FIG. 1, the result object RO1 is a line visualizing the result value whereas in the example of FIG. 3 the result object includes a numerical representation DRO of the result value. The result object representation as shown in FIG. 1 may be preferable in cases where the result value can be expressed in the same units of measurement as the potential state values. In other words, if the outcome of the optimization has the same dimension as the type of the potential states in the interactive GUI, the value associated with the graphical result object can be fit into the respective GUI presentation as a constant value.

Once the user is confronted with the optimization result for the default configuration, the user may be concerned about the energy consumption associated with the default configuration, and may start modifying the default (or current) configuration. The modification occurs via a drag action. In FIG. 1, the interactive object PS4 (SV4, PV4) is moved by the drag action DA1 to define a new potential state represented by the interactive user interface object PS4'. PS4' is associated with the configuration value pair (SV4', PV4'). This drag action DA1 has also modified the function f1 of the default configuration into a function f1' characterizing the modified configuration.

In the example of FIG. 3, the user drags the internal temperature values associated with the low outside temperatures -5 and 0 degrees to 18 degrees and thus generates modified potential states represented by the diamonds DS1', DS2'. This data input action results in a modified configuration corresponding to the four configuration value pairs (18, - 5), (18, 0), (20, 5), and (20, 10) which is now received 1300 by the optimizer.

In other words, when the user is concerned about the energy consumption, the user may be ready to accept a lower room temperature when it is very cold outside. This is reflected by the modified configuration. The optimization algorithm of the optimizer is now re-applied 1400 to the modified configuration further optimizing the combination of inputs consistent with the future real-world object (e.g., house heating) state in accordance with the modified configuration under the optimization constraints. The optimizer again determines a result value for the modified configuration which is then provided to the GUI 200 to be visualized, and is also provided 1500 to the user 10 as graphical result object RO'. The user immediately recognizes by how much the energy consumption of the smart house is reduced when applying the modified configuration with the potential states represented by DS1', DS2', DS3 and DS4. Then, the user is able to gauge the energy saving relative to his personal feelings about the loss of comfort due to a lower room temperature.

In case the user is not impressed by the energy savings achieved by the modified configuration, but is rather afraid of being cold when it is very cold outside (OuT=-5), the user may perform a further drag action to move DS2' back to the position of the original DS2 object, and then further move the DS1' object to a new position (DS1") with the configuration value pair (22, -5). Again, this further modified configuration will become an input to the optimizer 120 and the optimization algorithms (e.g., OA1 and/or OA2) determine one or more further result values being provided 1500 to the user, for example, as the graphical result object RO".

If the user is satisfied by the tradeoff between the modified energy consumption and the modified assessment of comfort from the new configuration (for example, when the additional expected feeling of comfort from higher room temperatures over-weights the disutility from higher energy consumption), the user can select 1600 this modified configuration and have it deployed 1700 to the house heating control unit in order to operate the real-world object (house heating) in accordance with the selected configuration.

Thus, an advantageous feature of the GUI is its ability to provide a simple and intuitive visualization of how this tradeoff affects the future states of the real-world object, combined with a (sophisticated) hidden layer of optimization. Deployment of the configuration in the example of FIG. 3 means that the configuration value pairs are transmitted to a controller of the house heating device where they are used for temperature regulation in accordance with the configuration value pairs of the selected configuration.

In general, as shown in FIG. 1, the user can drag DA1 an interactive user interface object PS4 in such a way that both values of the respective configuration value pair are modified. In the example of FIG. 1, the potential state (SV4, PV4) is the one which is important to the user and the result of the optimization applied to the modified configuration is represented by the second graphical result object RO2 giving an immediate feedback to the user regarding the implication of the user driven modification of the configuration on the real-world object 30. In the example, the configuration c1 is finally selected by the user and deployed to the real-world object.

Optionally, the optimizer 120 may include a plurality of optimization algorithms. For example, the further optimization algorithm OA2 may be suitable for a completely different optimization scenario with a different base parameter BP and a different type PST of potential states as described in the example of FIG. 4.

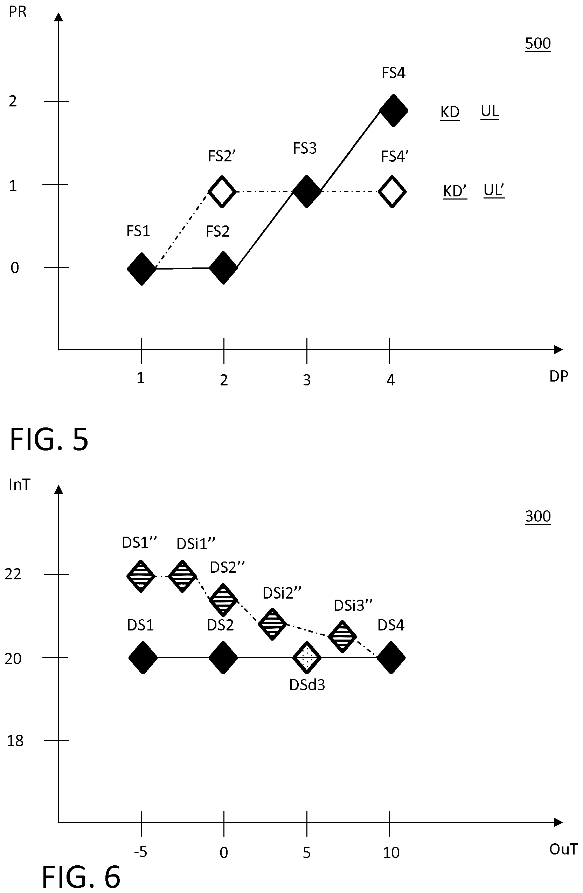

It is to be noted that, in one embodiment, the user may also delete any one of the existing potential states in a configuration, or may add additional potential states to the configuration. This embodiment will be described in more detail in FIG. 6.

FIG. 4 illustrates a further simplified view 400 of a GUI according to an embodiment. The example scenario behind FIG. 4 is similar to the example scenario explained with FIG. 3. An owner of an in-door swimming pool decides about the water temperature. However, in addition to the existing GOW heating options the heating energy can also be solar energy SE. For this example scenario, the base parameter is solar irradiance SI (that is, solar light intensity). The decision to be taken by the pool owner is about the temperature configuration depending on the value of the SI. Such a configuration can be implemented in different ways by storing produced solar energy in a battery (or another appropriate energy storage), or by using it for heating.

Therefore, the type of the potential states in this example is the water temperature (WT).

It is assumed that the water temperature is given by a known function of solar light intensity, GOW consumed, and by the fraction of solar energy FSE stored in a battery (or, equivalently, of the fraction FSE' = 1 - FSE of solar energy that is consumed): That is, the water temperature is a function G2 depending on SI, FSE and GOW (the water temperature is directly affected by solar light intensity SI, e.g., driving electrical energy production by photovoltaic cells):
WT = G2(SI, FSE, GOW)

Similar to the previous example, the user intends to deploy an optimized configuration for temperature regulation of the pool water temperature. For reasons of simplicity, again only four potential states of a configuration are discussed. It is assumed that the default configuration includes again a constant water temperature configuration for all four potential states at each of the following four base parameter values: SI1= 50 W/m2, SI2 = 100 W/m2, SI3 = 200 W/m2, SI4 = 300 W/m2. The corresponding potential states are represented by the interactive diamond objects ES1 to ES4, respectively. Thus, the current configuration is presented to the user in the interactive GUI 400 for selection or modification:
CONFIG = ((WT1,SI1), (WT2, SI2), (WT3, SI3), (WT4, SI4))

The input combinations are now different from the previous example. They are combinations of (GOW, FSE), where FSE is the fraction of the solar energy to be stored in an energy storage (e.g., a battery). Thus, the GUI 400 shows the interactive objects ES1 to ES4 with the default configuration value pairs (22, 50), (22, 100), (22, 200), (22, 300).

The inputs into the optimization algorithm (e.g., OA2 of FIG. 1) are given by GOW and FSE. One constraint is that FSE >=0 and FSE <= 1. Thus, an input combination is given by INPUT_COMBIN = ((GOW1, FSE1), (GOW2, FSE2), (GOW3, FSE3), (GOW4, FSE4)).

The optimization objective in the example is again to minimize environmental damage. It is assumed that the damage to the environment associated with the INPUT_COMBIN is given by some function F2:

F2(INPUT_COMBIN) = F2((GOW1, FSE1), (GOW2, FSE2), (GOW3, FSE3), (GOW4, FSE4)).

An input combination INPUT_COMBIN is consistent with the configuration CONFIG if and only if it attains the desired water temperature in every given state represented by the interactive objects ES1, ES2, ES3, ES4:
WT1 = G2(SI1, FSE1, GOW1), ..., WT4 = G2(SI4, FSE4, GOW4) (consistency conditions)

Again, the dependence of the function F2 on the INPUT can be complex because the decision to store some of the solar energy in the battery at a given point in time has impact on its availability in all other future states later on. The GUI 400 allows the user to select a configuration: Water temperature as a function of solar irradiance. Again, the optimization algorithm (e.g., OA2) behind the GUI finds all possible inputs (in this example: GOW, FSE) that are compatible with the temperature configuration across possible values of solar irradiance SI (as defined by the potential states). Then, OA2, solves the objective minimization problem:
Minimize F2(INPUT_COMBIN) over all INPUT_COMBIN satisfying the consistency conditions.

For example, standard gradient descent methods or combinatorial optimization methods may be used to find the optimal INPUT_COMBIN. A person skilled in the art may also use other appropriate optimization methods.

The system can provide the outcome of this minimization problem as a single graphical result object ERO representing the total energy consumption. However, the user may also want to see a breakdown into the GOW and FSE values. In this case, the GUI 400 can also provide to the user two corresponding addition graphical result objects associated with the default configuration.

The user may now modify the default configuration by deciding that in situations with more available solar energy (higher SI values) a warmer pool water temperature is intended. In the example, the user drags the interactive objects ES3 and ES4 to new positions ES3' and ES4'. As a result, the modified configuration provides the modified configuration value pairs (24, 200) and (25, 300) as input to the optimizer. That is, the user intends to see the impact on the energy consumption values when a higher pool temperature (24 and 25 degrees) is set in case of more available solar energy (200 W/m2 and 300 W/m2). The optimization algorithm is now re-applied to the modified configuration and the respective graphical result object(s) ERO' (and optionally GOW', FSE') are shown to the user. The user can now select the default of the modified configuration for deployment. In case the additional energy consumption for the modified configuration is primarily compensated by the solar energy, the user may decide to deploy the modified configuration to have a more convenient water temperature while still keeping the environmental damage low. Again, the decision about the choice of the optimal configuration is fully determined by the user-specific assessment of the tradeoff between additional comfort and the unhappiness about additional energy consumption. The GUI provides a simple and intuitive visualization of this tradeoff, combined with a (sophisticated) hidden layer of optimization which allows the user to identify the desired configuration to be deployed to the real-world object. Thereby, the user is supported by the claimed interactive data input method allowing to modify the configurations and finally selecting a desired modification. It is to be noted that the environmental damage can be defined as a complex (and even non-linear) function of the energy consumption. For example, the $CO_2$ emission value associated with the energy consumption may be computed. However, for the disclosed interactive user input method for editing configurations this is of no relevance at all. In general, the values represented by the graphical result objects can be determined by an arbitrary function of the input combinations. That is, the computer system provides future status information regarding a technical system (e.g., pool with heating), and the information provides guidance for that the system can be optimized (e.g., using or not using energy from a particular source, etc.)

FIG. 5 illustrates a further example scenario with a drug dispenser being the real-world object. A selected configuration finally optimizes the drug dosage for a patient with regards to a tradeoff between pain reduction for the patient and damage to the patient's health by the drugs. The example relates to medication dose configuration for painkillers for a particular patient. The base parameter for this example is the degree of pain DP with DP1=1, DP2=2, DP3=3, DP4=4. In this scenario the user is a medically trained person who intends to design a configuration with an optimum regarding the level of pain the patient can tolerate. Therefore, the type of the potential states in the example is the level of pain reduction PR.

Typically, painkillers have side effects. For example, the usage of too much of Ibuprofen™ (IB) can cause kidney damage; the usage of Aspirin™ (AP) may increase the likelihood of ulcers. The objective of a doctor is to design a treatment that attains the desired pain reduction, and at the same time minimizes total kidney damage (KD) and total ulcers likelihood (UL). In the example, the doses IB and AP of ibuprofen and aspirin are used as inputs to the optimization problem defined below. A default configuration in the example is given by a pain reduction (PR) configuration (FS1, FS2, FS3, FS4) specifying the degree of pain reduction for each pain level DP1=1, DP2=2, DP3=3, DP4=4 and the respective pain reduction PR1=0, PR2=1, Pr3=2. Medical studies results can be used to derive a function G3 such that pain reduction for a given a pain level DP is given by:
PR = PR(DP, IB, AP)

At the same time, an input combination:
INPUT_COMBIN = ((IB1, AP1), (IB2, AP2), (IB3, AP3), (IB4, AP4))
leads to a total kidney damage:
KD = F_KD((IB1, AP1), (IB2, AP2), (IB3, AP3), (IB4, AP4)),

and to a total ulcers likelihood:
UL = F_UL((IB1, AP1), (IB2, AP2), (IB3, AP3), (IB4, AP4)).

The shapes of the functions F_KD and F_UL can be determined from medical studies, and are included in the respective optimization algorithm. The user (e.g., a doctor) decides how important each of KD and UL are for the respective patient by selecting respective weights weight_KD and weight_UL in the objective function, which is then defined as :

$$ \text{Objective} = \text{Minimize}(\text{weight\_KD} * \text{F\_KD(INPUT\_COMBIN)} + \text{weight\_UL} * \text{F\_UL(INPUT\_COMBIN)}) $$

The Objective is then to be minimized over all input combinations that are consistent with the configuration and satisfy the constraints pre-specified by the user (for example, one constraint might be that ibuprophen consumption must always be below 400mg; that is IB1<400mg, ..., IB4<400mg). An input combination is consistent with the configuration if and only if
FS1 = PR(DP1, IB1, AP1), ..., FS4 = PR(DP4, IB4, AP4) .

This minimization problem can usually be solved using standard techniques such as gradient descent or combinatorial optimization.

For example, the default configuration can include a maximum level of pain reduction of "2" with the default configuration value pairs: (0, 1), (0, 2), (1, 3), (2, 4). For any particular configuration, there may be multiple pain killer dose combinations which can be used to achieve the particular configuration. In other words, typically different dose combinations of painkillers can lead to the same treatment effect for the patient. All such dose combinations are precisely those that are consistent with the configuration. The GUI 500 shows the default configuration with the interactive user interface objects FS1 to FS4. The default configuration is provided as an input to the optimizer. The corresponding optimization algorithm looks for the optimal inputs (inputs = ((IB1, AP1), (IB2, AP2), (IB3, AP3), (IB4, AP4)) to minimize the "Objective" over all possible dosages of painkillers that attain the pain reduction in accordance with the default configuration and satisfy the user-defined constrains on permitted medication dosages.

The outcome of the optimization in this example may be provided to the user via one or two graphical result objects. A single graphical result object may represent the value of the (minimized) Objective. Alternatively, as in the example of FIG. 5, two graphical result objects KD, UL may be provided to show separately the total expected kidney damage and the total ulcers likelihood.

The user may now modify the configuration to use a more moderate and balanced treatment. The modified configuration includes the interactive objects FS1, FS2', FS3, FS4' where the level of pain reduction PR is set to "1" for DP levels "2" to "4".

The optimization algorithm is then re-applied to the modified configuration. As a result, the corresponding graphical result objects are provided to the user. The configuration input method allows the medically trained person to indicate to the system which of the potential states are perceived to be more relevant by the user. In other words, there may always be some potential states about which the user (e.g., a doctor) cares more about than about other states. For example, the user may be primarily worried about the states with very high pain levels 3 and 4 and may want to achieve a lot of pain reduction with the treatment for the highest degree of pain (DP=4). By increasing pain reduction PR the user immediately becomes aware about the health damage coming along with the respective configuration. The user may then interact with the interactive graphical objects to modify the configuration until the graphical result object(s) KD', UL' indicate a result which guarantees a suitable treatment when deploying the respective configuration to the drug dispenser. The decision about the choice of the optimal configuration is made by the user based on the user-specific feelings about the tradeoff between additional comfort of the patient (the person suffering from pain) and the potential health damage. The interactive data input method thereby supports the user quickly identify a desired configuration and have it deployed to the real-world object.

FIG. 6 is based on the example of FIG. 3 illustrating how a user can use the GUI 300 to also modify the granularity of a configuration by adding or deleting potential states which are then used as input for the respective optimization. In the example, the default configuration corresponds to the default configuration of FIG. 3. The user now decides to have a higher granularity for the heating control by modifying the default configuration in the following way. As in FIG. 3, the user increases the state value associated with DS1 to result in DS1". Further, the state DS2 is modified into DS"". In addition, the user is inserting additional potential states DSi1", DSi2", DSi3" and deletes the original state DS3 (the deletion marked as DSd3). For the insertion and deletion of interactive graphical objects, any known methodology can be used which allows the user to add or delete graphical objects in GUI 300. The modified configuration then includes the interactive objects DS1",DSi1", DS",DSi2", DSi3", DS4, and serves as a new input for the optimization algorithm(s).

For example, the user may touch on a certain point of the GUI 300 and indicate that a new potential state is to be inserted at the respective position. For example, a context menu may provide the option to insert such an object. This insert action performed by the user can be sensed by the user interface device and, thereby, a corresponding user defined input for inserting a further graphical interactive user interface object as a further potential state of the user defined modified configuration is received. The configuration value pair associated with the inserted object (i.e., the associated base parameter and sate value) can then be derived by the system from the position of the inserted object in the graphical user interface.

The user may also remove existing potential states from a configuration. For example, the user can select a respective interactive object (e.g., by touching on it) and select a delete action (e.g., from a context menu). As a result, the system removes the selected object from the corresponding configuration.

It is to be noted that the previous examples only have explanatory character are not supposed to limit the scope of the claims with regards to the types of real-world objects described in the example. Rather, the claimed data input approach for modifying configurations of real-world objects can be applied to any real-world object which may be subject to configuration.

For example, the real-world object may be a data storage system for storing data structures, such as digital photos. The data storage system may have a data accumulation and storage technology to store such digital photos. Each time a new data structure arrives (e.g., a new photo is recorded), the data storage system needs to decide whether to compress the photo at the cost of losing a part of the information. By offering the possibility for a user to modify the configuration of the data storage system, the user can decide on the quality of the data being stored.

The base parameter in this example is the data arrival intensity (DAI) (e.g., measured in megabyte per day, mpd). The type of the potential states is the admissible data quality loss (DQ).

For simplicity, it is assumed that the base parameter DAI can take values DAI = 1, 2, 3, 4. The configurable state values of the potential states include various DQ values. A configuration specifies DQ (admissible quality loss of the stored data) as a function of DAI. The user's objective may be to maximize the speed of data extraction (SDE), while at the same time minimizing the memory size occupied by the data. An input parameter IP controls the easiness with which the data can be extracted. For example, IP can be a parameter in an archiving software used for archiving the received photos in the data storage system; or, it could control fractions of the data stored on different devices.

It is assumed that speed of data extraction is given by a known function F3 of the configuration and input combination: SDE = F3((DQ1, DAI1, IP1), (DQ2, DAI2, IP2), (DQ3, DAI3, IP3), (DQ4, DAI4, IP4)) for some function F3. Given a configuration CONFIG = ((DQ1, DAI1), (DQ2, DAI2), (DQ3, DAI3), (DQ4, DAI4)), the user's objective may be to maximize total SDE over input combinations INPUT_COMBIN = (IP1, ..., IP4).

The graphical result object as the outcome of this optimization may represent the average speed of data extraction for the current configuration. The user may then modify the configuration if the result does not meet the user expectations. Again, the interactive data input method for editing a configuration supports the user in making the decision regarding the choice of the optimal configuration based on a user-specific assessment regarding the tradeoff between additional utility of a higher speed of data extraction and the potential loss in data quality.

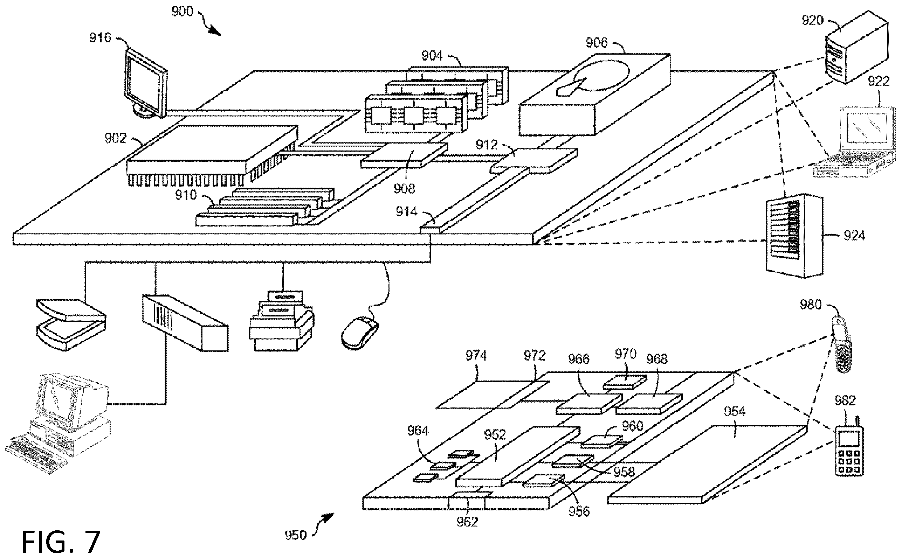

FIG. 7 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 100 of FIG. 1. Computing device 950 is intended to represent various forms of mobile devices, such as personal digital assistants, cellular telephones, smart phones, and other similar computing devices. For example, computing device 950 may be a smartphone or tablet computer which serves as the GUI 200 of FIG. 1. In some embodiments, the computing device 950 may also include the optimizer. In other embodiments, the optimizer may be implemented by the generic computer device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for editing a configuration of a real-world object to optimize a future state of the real-world object, the configuration including a plurality of discrete potential states for the real-world object wherein the potential states are described as values (SV1 to SV4) of a function (f1) of a base parameter (BP) on which the potential states depend, the method comprising:

   providing (1200), via a graphical user interface device (200), an initial visual representation of a default configuration wherein the plurality of potential states are represented by interactive graphical user interface objects (PS1 to PS4) which correspond to default function values at respective base parameter values, and providing at least one graphical result object (RO1) to a user (10) wherein the at least one graphical result object (RO1) represents at least one value characterizing the outcome of an optimization over a set of possible combinations of optimization inputs that are consistent with the default configuration and satisfy a pre-defined set of constraints, the optimization being determined by an optimization algorithm (OA1) adapted to optimize the combination of inputs consistent with the default configuration under one or more given optimization constraints on the set of input combinations wherein the one or more optimization constraints are a further input to the optimization algorithm;

receiving (1300), via a drag action (DA1) sensed by the user interface device (200), for at least one of the interactive graphical user interface objects (PS4) a corresponding user defined input to modify the associated default potential state into a user defined modified potential state as part of a user defined modified configuration; re-applying (1400) the optimization algorithm (OA1) to the modified configuration and further optimizing the combination of inputs consistent with modified configuration under the optimization constraint; and providing (1500) at least one modified graphical result object (RO2) to the user (10) wherein the at least one modified graphical result object represents at least one result value characterizing the outcome of the optimization over a set of combinations of inputs that are consistent with the modified configuration and satisfy the optimization constraints.

2. The method of claim 1, further comprising:

   receiving (1100) a selection for the base parameter (BP) and the type (PST) of the potential states.

3. The method of claim 1 or 2, further comprising:

   receiving (1600) a selection of a particular modified configuration or of the default configuration; and deploying (1700) the selected configuration (c1) to the real-world object (30) to operate the real-world object in accordance with the selected configuration.

4. The method of any of the previous claims, further comprising:

   receiving, via an insert action sensed by the user interface device (200), a corresponding user defined input for inserting a further graphical interactive user interface object as a further potential state of the modified configuration wherein the associated base parameter and sate values are derived from the position of the inserted object in the graphical user interface;
   and inserting the further graphical interactive user interface object as further potential state of the modified configuration.

5. The method of any of the previous claims, further comprising:

   receiving, via a delete action sensed by the user interface device (200), a corresponding user defined input for deleting an existing graphical interactive user interface object, and removing the existing interactive user interface object from modified configuration.

6. The method of any of the previous claims, wherein the outcome of the optimization satisfies user-specified constraints.

7. The method of any of the previous claims, wherein at least one value characterizing the outcome of an optimization is determined by a function of the combination of inputs.

8. A computer program product comprising instructions that, when loaded into a memory of a computing device and executed by at least one processor of the computing device, execute the method steps of the computer implemented method according to any one of the previous claims.

9. A computer system (100) for editing a configuration of a real-world object to optimize a future state of the real-world object, the configuration including a plurality of discrete potential states for the real-world object wherein the potential states are described as values (SV1 to SV4) of a function (f1) of a base parameter (BP) on which the potential states depend, the system comprising:

   a graphical user interface component (200) configured:

to provide to the user (10) an initial visual representation of a default configuration wherein the plurality of potential states are represented by interactive graphical user interface objects (PS1 to PS4) which correspond to default function values at respective base parameter values, and to provide at least one graphical result object (RO1) to the user wherein the at least one graphical result object (RO1) represents at least one corresponding result value characterizing the outcome of an optimization over a set of possible combinations of optimization inputs that are consistent with the default configuration under one or more given optimization constraints;

to sense a drag action (DA1) performed by the user on at least one of the interactive graphical user interface objects (PS4) as a user defined input to modify the associated default potential state into a user defined modified potential state as part of a modified configuration;

provide at least one modified graphical result object (RO2) to the user (10) wherein the at least one modified graphical result object represents at least one result value characterizing the outcome of an optimization over a set of combinations of inputs that are consistent with the modified configuration under the one or more given optimization constraints;

an optimizer component (120) communicatively coupled with the graphical user interface component (200), configured:

to determine the optimization for the default configuration by an optimization algorithm (OA1) adapted to optimize the combination of inputs consistent with the default configuration under the one or more given optimization constraints on the set of input combinations; and

to re-apply the optimization algorithm (OA1) to the modified configuration to further optimize the combination of inputs consistent with modified configuration under the one or more given optimization constraints.

10. The system of claim 11, wherein the graphical user interface component (200) is further configured:

to receiving a selection for the base parameter (BP) and the type (PST) of the potential states.

11. The system of claim 9 or 10, further configured to:

receive a selection of a particular modified configuration or of the default configuration; and
deploy the selected configuration (c1) to the real-world object (30) to operate the real-world object in accordance with the selected configuration.

12. The system of any of the claims 9 to 11, further configured to:

receive, via an insert action sensed by the user interface device (200), a corresponding user defined input for inserting a further graphical interactive user interface object as a further potential state of the modified configuration wherein the associated base parameter and sate values are derived from the position of the inserted object in the graphical user interface;
and insert the further graphical interactive user interface object as further potential state of the modified configuration.

13. The system of any of the claims 9 to 12, further configured to:

receive, via a delete action sensed by the user interface device (200), a corresponding user defined input for deleting an existing graphical interactive user interface object, and
remove the existing interactive user interface object from modified configuration.

14. The method of any of the claims 9 to 13, wherein the outcome of the optimization satisfies user-specified constraints.

15. The system of any of the claims 9 to 14, wherein at least one value characterizing the outcome of an optimization is determined by a function of the combination of inputs.

FIG. 1

1000

```
┌ ─ ─ ─ ─ ─ ─ ─ ─ ─ ─ ─ ─ ─ ─ ─ ┐
│  receiving selection for base parameter  │         1100
│       and type of potential states       │
└ ─ ─ ─ ─ ─ ─ ─ ─ ─ ─ ─ ─ ─ ─ ─ ┘
```

```
┌───────────────────────────┐
│     providing visual representation of     │
│   optimized default configuration with    │         1200
│   interactive graphical user interface     │
│                 objects                    │
└───────────────────────────┘
```

```
┌───────────────────────────┐
│     receiving user defined modified        │         1300
│      configuration via drag action         │
└───────────────────────────┘
```

```
┌───────────────────────────┐
│      re-applying optimization to modified  │
│     configuration under user defined       │         1400
│                 constraint                 │
└───────────────────────────┘
```

```
┌───────────────────────────┐
│   providing graphical result object to user │
│   representing value characterizing the     │         1500
│   outcome of the optimization for user      │
│          defined configuration              │
└───────────────────────────┘
```

```
┌ ─ ─ ─ ─ ─ ─ ─ ─ ─ ─ ─ ─ ─ ─ ─ ┐
│     receiving a selection of a configuration     │         1600
└ ─ ─ ─ ─ ─ ─ ─ ─ ─ ─ ─ ─ ─ ─ ─ ┘
```

```
┌ ─ ─ ─ ─ ─ ─ ─ ─ ─ ─ ─ ─ ─ ─ ─ ┐
│   deploying selected configuration to real-     │         1700
│               world object                      │
└ ─ ─ ─ ─ ─ ─ ─ ─ ─ ─ ─ ─ ─ ─ ─ ┘
```

# FIG. 2

FIG. 3

FIG. 4

PR

500

FS4

2

KD   UL

FS3    FS4'

FS2'

1

KD'   UL'

FS1    FS2

0

1    2    3    4    DP

## FIG. 5

InT

300

DS1''   DSi1''

DS2''

22

DSi2''

DSi3''

DS1    DS2    DS4

20

DSd3

18

-5    0    5    10    OuT

## FIG. 6

FIG. 7

EP 3 683 741 A1

Europäisches
Patentamt

European
Patent Office

Office européen
des brevets

**PARTIAL EUROPEAN SEARCH REPORT**

under Rule 62a and/or 63 of the European Patent Convention.
This report shall be considered, for the purposes of
subsequent proceedings, as the European search report

Application Number

EP 19 15 2612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/378373 A1 (SPRINKLE JONATHAN [US] ET AL) 31 December 2015 (2015-12-31) <br> * abstract; figures 1,2A,2B,4A,4B,7,8 * <br> * paragraphs [0001] - [0006] * <br> * paragraphs [0018] - [0022], [0025], [0026] * <br> * paragraphs [0037] - [0043], [0051] - [0054] * <br> * paragraph [0060] * <br> ----- <br> -/-- | 1-15 | INV. <br> G06Q10/04 <br> G05D23/19 <br> G06Q50/06 |

TECHNICAL FIELDS
SEARCHED        (IPC)

G06Q
G05D

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 3 July 2019 | Bauer, Rodolphe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

page 1 of 4

Europäisches
Patentamt

European
Patent Office

Office européen
des brevets

**PARTIAL EUROPEAN SEARCH REPORT**

Application Number

EP 19 15 2612

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| Y | RUI YANG ET AL: "A GUI-based simulation platform for energy and comfort management in Zero-Energy Buildings", NORTH AMERICAN POWER SYMPOSIUM (NAPS), 2011, IEEE, 4 August 2011 (2011-08-04), pages 1-7, XP031940592, DOI: 10.1109/NAPS.2011.6024869 ISBN: 978-1-4577-0417-8 * abstract; figures 1,6,14,15 * * page 1, last paragraph - page 3, right-hand column * * page 4, left-hand column - page 5, right-hand column * * page 7, left-hand column - right-hand column * ----- | 1-15 | |
| X | WO 02/35304 A2 (HONEYWELL INT INC [US]) 2 May 2002 (2002-05-02) * abstract; figure 2 * * page 1, line 5 - page 3, line 19 * * page 4, line 12 - page 5, line 18 * * page 6, line 8 - page 7, line 19 * * page 8, lines 1-17 * ----- -/-- | 1-15 | TECHNICAL FIELDS SEARCHED (IPC) |

EPO FORM 1503 03.82 (P04C10)

Europäisches
Patentamt

European
Patent Office

Office européen
des brevets

# PARTIAL EUROPEAN SEARCH REPORT

Application Number

EP 19 15 2612

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| Y | Brittany Hall: "Developing Graphical User Interfaces in Python using PyQt for Laboratory Use", , 30 November 2017 (2017-11-30), XP055577366, ISBN: 978-1-339-50558-9 Retrieved from the Internet: URL:http://folk.ntnu.no/preisig/HAP_Specials/AdvancedSimulation_files/2017/project%20reports/PyLabControl/Brittany%20Hall%20-%20PyQt_BHall.pdf [retrieved on 2019-04-03] * pages 3-5 * * pages 7-8; figure 3.1 * * page 9; figure 3.2 * * page 13; figure 3.3 * * page 18; figure 5.1 * * page 26; figure 5.7 * * 5.3.3 Plotting Widget; pages 30-31; figure 5.8 * ----- | 1-15 | |
| A | US 2009/319090 A1 (DILLON JIM C [US] ET AL) 24 December 2009 (2009-12-24) * abstract; figures 1,2, 3e * * paragraphs [0009] - [0011], [0017] - [0019] * * paragraphs [0022] - [0025] * ----- | 1-15 | TECHNICAL FIELDS SEARCHED (IPC) |

-/--

EPO FORM 1503 03.82 (P04C10)

Europäisches
Patentamt

European
Patent Office

Office européen
des brevets

**PARTIAL EUROPEAN SEARCH REPORT**

Application Number

EP 19 15 2612

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| Y | US 2016/377307 A1 (FADELL ANTHONY MICHAEL [US] ET AL) 29 December 2016 (2016-12-29) * abstract; figures 6A-6C, 7A,7B8E,8F,9, 10A-10C, 12 * * column 7, line 42 - column 8, line 16 * * column 15, line 8 - column 17, line 58 * * column 18, line 44 - column 20, line 33 * * column 22, line 37 - column 23, line 11 * * column 23, line 48 - column 24, line 9 * * column 25, line 48 - column 26, line 63 * ----- | 1-15 | |
| | | | TECHNICAL FIELDS SEARCHED (IPC) |

EPO FORM 1503 03.82 (P04C10)

Europäisches Patentamt

European Patent Office

Office européen des brevets

**INCOMPLETE SEARCH
SHEET C**

Application Number

EP 19 15 2612

Claim(s) completely searchable:
-

Claim(s) searched incompletely:
1-15

Reason for the limitation of the search:

Claims 1-15 have been searched in the light of the first embodiment directed at an heater. The embodiments relating to heating of a pool in combination with PV panels and to a medical treatment and to a system for data storage have not been searched

## ANNEX TO THE EUROPEAN SEARCH REPORT
## ON EUROPEAN PATENT APPLICATION NO.

EP 19 15 2612

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2019

| Patent document cited in search report | | | Publication date | Patent family member(s) | | | Publication date |
|---|---|---|---|---|---|---|---|
| US 2015378373 | A1 | | 31-12-2015 | NONE | | | |
| WO 0235304 | A2 | | 02-05-2002 | AU | 3135702 | A | 06-05-2002 |
| | | | | CA | 2426689 | A1 | 02-05-2002 |
| | | | | CN | 1481523 | A | 10-03-2004 |
| | | | | CZ | 20031464 | A3 | 15-10-2003 |
| | | | | EP | 1328855 | A2 | 23-07-2003 |
| | | | | JP | 2004512489 | A | 22-04-2004 |
| | | | | KR | 20030041174 | A | 23-05-2003 |
| | | | | US | 6595430 | B1 | 22-07-2003 |
| | | | | US | 2003208282 | A1 | 06-11-2003 |
| | | | | US | 2006027671 | A1 | 09-02-2006 |
| | | | | US | 2008161978 | A1 | 03-07-2008 |
| | | | | US | 2010131884 | A1 | 27-05-2010 |
| | | | | US | 2015204564 | A1 | 23-07-2015 |
| | | | | WO | 0235304 | A2 | 02-05-2002 |
| US 2009319090 | A1 | | 24-12-2009 | NONE | | | |
| US 2016377307 | A1 | | 29-12-2016 | US | 2013024799 | A1 | 24-01-2013 |
| | | | | US | 2015025691 | A1 | 22-01-2015 |
| | | | | US | 2016377307 | A1 | 29-12-2016 |
| | | | | US | 2018023832 | A1 | 25-01-2018 |

EPO FORM P0459

For more details about this annex : see Official Journal of the European Patent Office, No. 12/82